# FASCICULE DE BREVET EUROPEEN

(11) **EP 3 741 500 B1**
(45) Date de publication et mention de la délivrance du brevet: **09.10.2024**
(21) Numéro de dépôt: 20174933.0
(22) Date de dépôt: 15.05.2020
(51) Int. Cl.: B23P 15/34, B23C 5/10, B23P 15/28, B23C 5/28, B23K 26/38

(54) **PROCÉDÉ POUR RÉALISER UNE MICROFRAISE COMPORTANT DES CANAUX DE REFROIDISSEMENT INTÉGRÉS**
VERFAHREN ZUM HERSTELLEN EINER MIKROFRÄSE, DIE INTEGRIERTE KÜHLKANÄLE UMFASST
METHOD FOR MAKING A MICRO MILLING TOOL COMPRISING INTEGRATED COOLING CHANNELS

(30) Priorité: 22.05.2019 EP 19175938
(43) Date de publication de la demande: 25.11.2020
(73) Titulaire: Eskenazi SA, ci-devant Outillage Eskenazi SA, 1227 Carouge (CH)
(72) Inventeur: GROSJEAN, Gilbert, 1162 St-Prex (CH); WÄLDER, Georg, 01710 Thoiry (FR); HAAS, Patrick, 1228 Plan-les-Ouates (CH); GILLI, Walter, 1213 Onex (CH); ADILJI, Agim, 1201 Genève (CH)
(74) Mandataire: Micheli & Cie SA

(56) Documents cités:
- WO-A1-2012/035070
- DE-U1- 202012 103 752
- FR-A- 1 287 927
- JP-A- 2015 223 654
- US-A1- 2016 229 010
- NICOLAS BEER ET AL: "Effiziente Kühlschmierung für Bohrbearbeitungen", WB WERKSTATT + BETRIEB, CARL HANSER VERLAG, vol. 148, no. 12, 1 December 2015 (2015-12-01), pages 60 - 63, XP001596564

## Description

La présente invention concerne un procédé pour réaliser une microfraise comportant des canaux internes pour un fluide de coupe, le procédé comprenant les étapes de :
a) réaliser une ébauche en carbure cémenté fritté de la microfraise ;
b) tailler la microfraise par meulage de l'ébauche.
Le document JP 2015 223654 A décrit un tel procédé.
Dans la présente invention, l'appellation de « microfraise » est utilisée pour désigner une fraise dont le diamètre est inférieur ou égal à 3mm. D'autre part, on comprendra que, par fluide de coupe on entend par exemple de l'huile entière, ou de l'émulsion huile-eau, ou encore un gaz réfrigérant chargé de lubrifiant, etc.

### ART ANTERIEUR

L'outil de coupe est l'élément central du processus de fraisage. Il détermine, tout à la fois, l'efficacité du procédé et la qualité des pièces usinées. A l'heure actuelle, les outils de coupe sont principalement en carbure de tungstène et présentent plusieurs arêtes tranchantes. Dans le cas de fraises de gros diamètres, les arrêtes tranchantes sont constituées par des plaquettes interchangeables. En revanche, dans le cas de fraises de petits ou moyens diamètres, les arrêtes tranchantes viennent de matière avec le reste de l'outil, de sorte que ces fraises sont monoblocs.

Lors de l'utilisation d'une fraise, il est important d'alimenter simultanément en fluides de coupe une zone située entre l'outil et la pièce à usiner. Les fluides de coupe servent principalement à l'évacuation des copeaux, au refroidissement et à la lubrification. Du point de vue de la préservation de l'environnement, comme de celui de la réduction des coûts de fabrication, un usinage à sec serait préférable. Cependant, de nombreuses applications nécessitent une lubrification si l'on veut obtenir une tolérance, une qualité de surface et une usinabilité suffisantes. Dans le cas où le recours à un fluide de refroidissement est nécessaire, ce fluide devrait être amené aussi près que possible de la zone de coupe, de façon que son efficacité soit maximale. A cette fin, on a aujourd'hui recours à des buses ajustables qui permettent de projeter un jet de fluide dans une direction déterminée.

Il existe également depuis peu des machines-outils qui sont conçues pour permettre d'injecter du fluide de coupe à travers la broche, le porte-outil et enfin à travers un trou central de l'outil de coupe. Aujourd'hui, cette technologie est limitée à de gros outils (ayant un diamètre de 6 mm ou plus). Pour les microfraises qui ont un diamètre ≤ 3 mm, et tout particulièrement pour les petites microfraises ayant un diamètre <1 mm, aucune technologie n'existe qui permette de lubrifier individuellement chaque arrête tranchante en bout de l'outil. Le document de brevet CH 706 934 B1 décrit bien un outil de fraisage de petit diamètre qui comporte trois ou quatre canaux latéraux de refroidissement intégrés dans l'outil. Il s'agit toutefois d'un outil de fraisage à embout qui comporte une queue de plus grand diamètre. Les canaux parallèles sont intégrés dans la queue de façon à déboucher au niveau de la jonction conique entre la queue et la partie active de l'outil. Autrement dit, les canaux débouchent loin en retrait de la zone de coupe de l'outil. Selon le document antérieur susmentionné, l'alimentation en fluide de coupe est assurée par projection du fluide de coupe hors des canaux, parallèlement à l'axe de l'outil, en direction de la zone de coupe. On comprendra que la mise au point d'un tel outil de coupe implique un travail de développement long et fastidieux, notamment pour optimiser la position, le diamètre, la forme, etc. des trous latéraux de manière à ce que le fluide de coupe atteigne effectivement sa cible. D'autre part, le diamètre des canaux latéraux parallèles doit être très petit ; de l'ordre de 0.1 à 0.3 mm. La réalisation de tels trous minuscules à des emplacements précis avec une direction bien définie représente plusieurs défis. En effet, en raison de sa dureté, le carbure de tungstène est difficile à usiner par des méthodes conventionnelles. Les méthodes thermiques comme l'usinage par électroérosion ou par laser permettent d'obtenir la géométrie requise. Toutefois, on sait que ces méthodes thermiques provoquent l'apparition de microfissures à la surface de la pièce.

En ce qui concerne les outils de fraisage en général, l'idéal serait d'avoir une lubrification individuelle de chaque arrête tranchante, afin d'injecter le liquide dans la zone critique, exactement entre le tranchant et l'amorce de copeau. On obtiendrait ainsi un meilleur refroidissement des pièces et des outils, une réduction du frottement de l'amorce de copeau contre l'outil de coupe, et on préviendrait plus efficacement l'adhésion des copeaux à l'arrête tranchante. Le document de brevet EP 2 298 491 B1 décrit un outil de coupe, ainsi qu'un procédé pour réaliser l'ébauche (ou préforme) de cet outil de coupe en une seule opération d'extrusion. L'outil de coupe en question peut prendre la forme, par exemple, d'un foret ou d'une fraise. Cet outil possède la caractéristique de comporter une pluralité de canaux internes qui sont agencés pour éjecter du fluide de coupe. Lesdits canaux parcourent l'outil de la queue à la pointe indépendamment les uns des autres. Le nombre de canaux internes peut être égal au nombre d'arrêtes tranchantes que comporte la tête de l'outil de coupe, et les différents canaux sont agencés pour amener du fluide de coupe jusqu'à proximité de chaque arrête tranchante. Selon le document antérieur susmentionné, l'ébauche est formée en une seule opération d'extrusion, avec les canaux internes qu'elle comporte. Les canaux internes ne sont toutefois pas rectilignes mais présentent chacun une forme d'hélice circulaire, de sorte qu'ils tournent autour de l'axe longitudinal de l'outil, alors que la distance qui les sépare de cet axe reste constante sur toute la longueur de l'outil. Le document antérieur susmentionné explique encore que la forme en hélice des canaux internes est une caractéristique nécessaire. En effet, dans la partie active de l'outil, les canaux doivent trouver un chemin qui leurs permette d'éviter les goujures. En effet, si un canal était coupé par une goujure, le fluide de coupe qu'il transporte ne pourrait pas atteindre la pointe de l'outil. On comprendra en outre de ce qui précède que l'angle d'hélice des canaux latéraux doit être sensiblement le même que l'angle d'hélice de la denture de l'outil.

Un inconvénient de la solution antérieure qui vient d'être décrite est que la résistance hydraulique d'un canal courbe est plus importante que celle d'un canal rectiligne. En conséquence, la quantité de fluide de coupe éjectée à travers un canal hélicoïdal est inférieure à la quantité de fluide éjectée à travers un canal rectiligne soumis à la même pression. Ce problème est encore exacerbé dans le cas d'outils de petites tailles (<5 mm). En effet, les petits outils ont des canaux encore plus petits, et on sait que la résistance qui s'oppose à l'écoulement d'un fluide visqueux dans un canal est inversement proportionnelle au carré du diamètre du canal. De plus, la moindre irrégularité du diamètre des canaux, la moindre variation de la rugosité de leur surface, ou la présence de bavures peut réduire encore plus drastiquement le débit du fluide de coupe. D'autre part, la faible épaisseur des parois et la petitesse des canaux se conjuguent pour rendre les parois très sensibles aux microfissures. En effet, durant leur fonctionnement, les outils de coupe sont exposés à des conditions de travail difficiles, pression interne pouvant atteindre 120 bars lorsque le liquide est injecté à travers des canaux internes, forces de coupe importante, chaleur, vibrations, et forces centrifuges (en raison de la vitesse de rotation élevée de l'outil pouvant aller jusqu'à 50 000 tr/ min). Dans ces conditions, on comprend bien que la présence de microfissures risque de réduire la durée de vie de l'outil.

Un besoin existe à l'heure actuelle de disposer d'outils de fraisage de petit diamètre (≤ 3 mm) dont les canaux de refroidissement permettent de lubrifier individuellement chaque arrête tranchante de l'outil avec un débit de fluide suffisant, et sans que la présence des canaux de refroidissement ne réduise la durée de vie de l'outil.

### BREF EXPOSE DE L'INVENTION

Un but de la présente invention est de remédier aux problèmes de l'art antérieur qui viennent d'être expliqués. La présente invention atteint ce but ainsi que d'autres en fournissant un procédé pour réaliser une fraise de diamètre inférieur ou égal à 3 mm et comportant des canaux internes pour un fluide de coupe, et qui est conforme à la revendication 1 annexée.

Le carbure cémenté fritté dont sont fait le premier et le second barreau cylindrique est de préférence un cermet à base de carbure de tungstène. La composition de ce cermet peut varier en fonction des caractéristiques recherchées pour le matériau. Elle comprend de 80 % à 95 % de carbure de tungstène, auquel s'ajoute du cobalt, ainsi que divers éléments d'addition comme le chrome ou le vanadium. On réalise ce carbure cémenté à partir de poudre par un procédé de frittage (métallurgie des poudres). Le cobalt sert de liant entre les grains de carbure dans le matériau une fois fritté. Le carbure de tungstène cémenté est très dur. Il permet d'obtenir une pièce avec d'excellentes caractéristiques mécaniques et une grande résistance à l'usure. Le cobalt qu'il contient a également pour effet de limiter la fragilité du carbure de tungstène en augmentant la ductilité de l'ensemble.

### BRÈVE DESCRIPTION DES FIGURES

D'autres caractéristiques et avantages de la présente invention apparaîtront à la lecture de la description qui va suivre, donnée uniquement à titre d'exemple non limitatif, et faite en référence aux dessins annexés dans lesquels :
- les figures 1A et 1B sont deux vues en perspectives, respectivement de côté et en bout, de la tête d'un outil de fraisage de l'art antérieur ;
- la figure 2 est une vue de côté en perspective d'une microfraise réalisée par un premier mode de mise en oeuvre particulier du procédé de l'invention ;
- la figure 3 est vue schématique illustrant une préforme d'une partie tubulaire et une préforme d'une partie de tête obtenues à l'issue de l'étape « a₂ » du mode de mise en oeuvre particulier qui a déjà été mentionné en relation avec la figure 2 ;
- la figure 4 est la photographie d'une coupe longitudinale d'une ébauche unifiée qui comporte un trou axial borgne et qui a été obtenue à l'issue de l'étape « as » du mode de mise en oeuvre particulier qui a déjà été mentionné en relation avec les figures 2 et 3 ;
- la figure 5 est une vue schématique en perspective illustrant la préforme d'une partie de tête qui a été obtenue à l'issue de la sous-étape « x » d'un deuxième mode de mise en oeuvre particulier du procédé de l'invention ;
- la figure 6 est une vue partielle en coupe longitudinale d'une fraise réalisée par le mode de mise en oeuvre particulier qui a déjà été mentionné en relation avec la figure 5 ;
- la figure 7 contient quatre vues en perspective, sous des angles différents, de la tête de la fraise de la figure 6.

### DESCRIPTION DETAILLEE DE MODES DE MISE EN ŒUVRE

L'invention concerne un procédé pour réaliser une microfraise, et la présente description donne ci-après deux exemples de mise en oeuvre de ce procédé. Dans le but de faciliter la compréhension, la description commence par un exposé sommaire de certaines caractéristiques communes à la plupart des outils de fraisage connus.

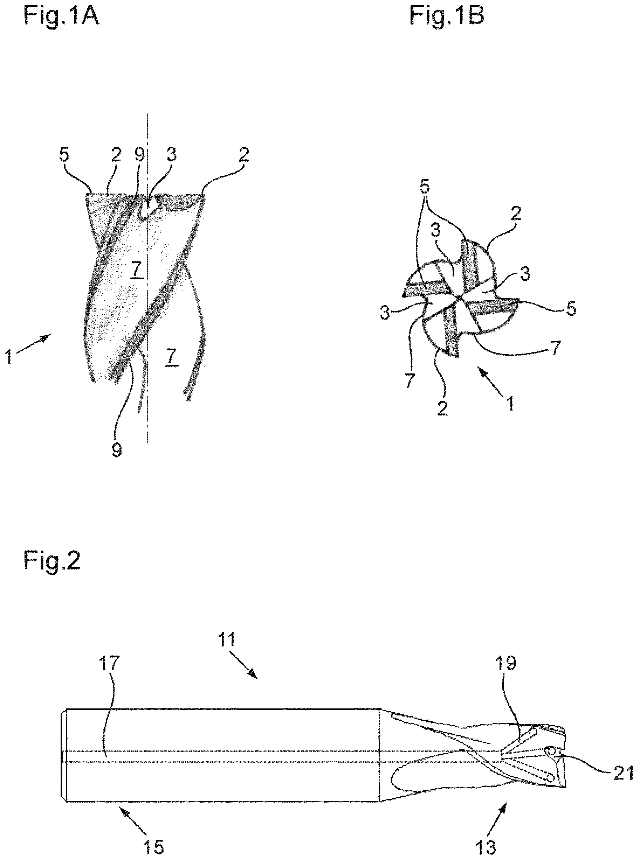

Les figures 1A et 1B sont deux vues en perspectives, respectivement de côté et de dessus, de la tête d'un outil de fraisage de l'art antérieur (référencé 1). L'outil de fraisage 1 possède une symétrie de rotation et, en se référant plus particulièrement à la figure 1B, on peut voir que, la symétrie de rotation est une symétrie d'ordre 4. Ainsi, l'extrémité de l'outil 1 comporte quatre dents 2 séparées les unes des autres par quatre piquées 3. De plus, chaque dent 2 comporte une arrête tranchante 5 qui borde une des piquées. Chaque piquée 3 s'ouvre sur une des quatre rainures hélicoïdales, ou goujures, 7 qui sont taillées dans la face latérale cylindrique de l'outil de fraisage 1. De plus, chacune des quatre arrêtes tranchantes 5 se prolonge par une lèvre hélicoïdale 9 qui s'étend sur la face cylindrique le long d'une des goujures 7.

La figure 2 est une vue en perspective de côté d'une microfraise (généralement référencé 11) qui se prête à être réalisé par un premier mode de mise en oeuvre exemplaire du procédé de l'invention. Rappelons que dans le présent document l'expression « microfraise » désigne une fraise dont le diamètre est inférieur ou égal à 3 mm. Conformément à l'invention, l'outil de fraisage 11 comporte des canaux internes pour un fluide de coupe. Ces canaux internes comprennent un canal central 17 agencé pour recevoir du liquide de coupe fourni par la machine-outil (non représentée) à travers le porte-outil (non représenté). On peut voir dans la figure 2 que les canaux internes comprennent également trois canaux de sortie (référencés 19 tous les trois) et que le canal central 17 s'étend longitudinalement à travers la queue 15 de l'outil de fraisage et traverse encore la majeure partie de la partie active 13 de l'outil pour se terminer par un embranchement donnant naissance au trois canaux de sortie 19.

La microfraise 11 représentée dans la figure 2 est une fraise à trois dents, qui comporte trois arrêtes tranchantes (non référencées) et trois piquées (une de celles-ci étant visible et référencée 21). De préférence, l'espacement angulaire entre les trois arrêtes tranchantes n'est pas tout à fait régulier. Dans l'exemple illustré, les arrêtes tranchantes sont disposées respectivement à 0°, 117° et 245° autour de l'axe de rotation de l'outil, et on comprendra donc que leur écartement mutuel n'est jamais identique. De manière connue en soi, cette géométrie irrégulière permet d'amortir les vibrations d'usinage et donc de limiter le broutage qui peut en résulter.

On comprendra que le nombre de canaux de sortie 19 est en rapport avec le nombre de dents, et que les canaux sont donc espacés azimutalement d'environ 120° autour de l'axe de rotation de l'outil 11. De plus, dans l'exemple illustré, les trois canaux 19 sont également inclinés d'environ 45° vers l'avant par rapport à l'axe de l'outil. On comprendra toutefois que l'invention ne se limite naturellement pas à une inclinaison particulière des canaux. Conformément à une variante avantageuse, les trois canaux de sortie 19 débouchent chacun dans une des piquées 21. Des expériences menées par la demanderesse ont montré que l'emplacement où débouchent les canaux de sortie influence de manière spectaculaire les performances de l'outil. La lubrification doit être fournie en priorité à la pointe de chacune des dents. Le positionnement des orifices de sortie des canaux 19 dans les piquées 21 permet de répondre à ce besoin.

On va maintenant décrire le déroulement d'une première variante de mise en oeuvre du procédé de l'invention en faisant référence aux figures 2, 3 et 4 et au tableau I annexés. La première (sous-) étape mentionnée dans le tableau I (sous-étape « a₁ ») consiste à se munir d'un premier et d'un second barreau cylindrique en carbure cémenté, les deux barreaux étant extrudés et frittés. Conformément à l'invention, le premier barreau cylindrique possède une forme de cylindre creux, alors que le second barreau cylindrique n'est pas creux. Selon une variante avantageuse, le carbure cémenté dont sont faits les deux barreaux cylindriques consiste en un alliage de carbure de tungstène et de cobalt qui est connu sous l'appellation de « métal dur ». La composition exacte (ou nuance) du métal dur peut varier en fonction des caractéristiques recherchées. En particulier, la proportion de cobalt peut varier entre 5 et 12% environ. Le métal dur peut également contenir des petites quantités de divers éléments d'addition comme par exemple du chrome ou du vanadium. De façon connue de l'homme du métier, les différents ingrédients qui entrent dans la composition du métal dur sont d'abord réduits en poudre, puis mélangés. La poudre est ensuite incorporée dans un liant organique de manière à obtenir une pâte homogène susceptible d'être extrudée. Rappelons que l'extrusion d'un matériau pâteux est une opération qui consiste à pousser la pâte à travers une buse de manière à former un corps de section transversale constante et de longueur arbitraire. On comprendra qu'on peut obtenir un corps en forme de cylindre plein en utilisant une buse circulaire. De plus, il est connu d'installer un mince filament cylindrique au centre de la buse circulaire pour obtenir un corps en forme de tube (de cylindre creux).

Après avoir obtenu par extrusion un corps en forme de tube et un autre corps en forme de cylindre plein, on pré-fritte ces deux corps crus pour éliminer le solvant organique, et on les fritte ensuite à environ 1400 °C, de manière à obtenir des cylindres de métal dur. Il vaut la peine de préciser qu'il est possible de se procurer de tels barreaux cylindriques extrudés et frittés dans le commerce. La mise en oeuvre de la sous-étape « a₁ » du tableau I peut donc consister en un simple achat.

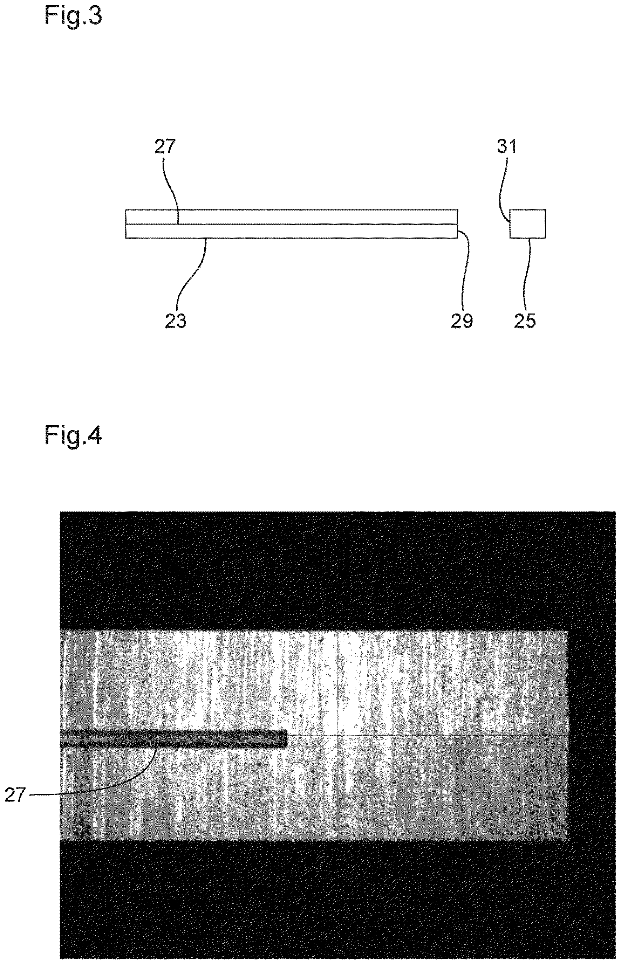

Selon le tableau I, la (sous-) étape suivante (sous-étape « a₂ ») consiste tout d'abord à tronçonner le premier et le second barreau cylindrique fritté pour obtenir respectivement une préforme de la partie tubulaire et une préforme de la partie de tête de l'ébauche d'une microfraise, et consiste ensuite à se servir d'une meule diamantée afin de polir et rendre bien plane au moins une face d'extrémité de chacune des deux préformes. En se référant maintenant à la figure 3, on peut voir que la préforme de la partie tubulaire est référencée 23 et que la préforme de la partie de tête est référencée 25. Conformément à ce qui vient d'être expliqué, la préforme 23 de la partie tubulaire comporte un trou axial 27 qui débouche de part et d'autre, sensiblement au centre des faces d'extrémités. Dans le présent exemple, les deux préformes ont un diamètre extérieur de 3,3 mm, le trou axial 27 a un diamètre de 0,3 mm, et la préforme 25 de la partie de tête a une longueur de 4 mm. Finalement, les deux faces d'extrémité qu'on a aplanies sont respectivement référencées 29 et 31.

La (sous-) étape « as » du tableau I consiste à agencer la préforme 23 de la partie tubulaire et la préforme 25 de la partie de tête, bout à bout, sur un support de frittage (non représenté), de manière à ce que la face d'extrémité aplanie 29 de la préforme 23 et la face d'extrémité aplanie 31 de la préforme 25 se touchent. On comprendra que le fait qu'on ait rendu les faces d'extrémité 29 et 31 bien planes durant l'étape « as » permet d'avoir un bon parallélisme, et donc un contact uniforme, entre les deux faces d'extrémité 29 et 31.

La (sous-) étape « a₄ » du tableau I consiste à chauffer les préformes 23 et 25 avec le support de frittage sous vide, ou sous atmosphère inerte, et à les maintenir à une température suffisante et pendant une durée suffisante pour souder ensemble la préforme 23 de la partie tubulaire et la préforme 25 de la partie de tête, de façon à former une ébauche unifiée comportant un trou axial borgne, comme illustré par la photographie de la coupe longitudinale (figure 4). Pour obtenir une soudure entre les deux préformes, on maintient ces dernières en contact à une température au moins égale à la température eutectique du carbure cémenté utilisé. Conformément au présent exemple, dans lequel les deux préformes sont en alliage de carbure de tungstène et de cobalt, on maintient ces dernières en contact à une température d'environ 1400°C pendant une durée qui est de préférence comprise entre 15 et 60 minutes. À la température de 1400°C, température légèrement supérieure à la température eutectique, la phase cobalt de l'alliage est liquide, et c'est elle qui provoque le phénomène de soudure par diffusion du cobalt liquide entre les deux faces d'extrémité 29 et 31 en contact.

La (sous-) étape « as » du tableau I consiste à rectifier d'éventuels défauts d'alignement entre les deux parties cylindriques 23 et 25 de l'ébauche unifiée à l'aide d'une rectifieuse « centerless ». Dans le présent exemple on rectifie l'ébauche à la cote 3.0 mm. Rappelons qu'une rectifieuse « centerless », appelée également rectifieuse sans centre, comporte habituellement une meule diamantée et une meule d'entraînement entre lesquelles est maintenue l'ébauche à rectifier.

Comme on vient de le voir, la mise en oeuvre des sous-étapes « a₁ » à « as » du tableau I permet de réaliser une ébauche cylindrique unifiée comportant un trou axial borgne. Les étapes suivantes du tableau I conduisent à la réalisation d'un outil de coupe à partir de cette ébauche unifiée. Tout d'abord, l'étape « b » consiste à tailler la microfraise. Pour cette étape d'usinage, il est possible de travailler l'ébauche unifiée exactement comme si on l'avait obtenue par frittage d'un corps cru unique. Dans le présent exemple, on utilise pour cela une machine CNC (à commande numérique par calculateur) équipée de meules diamantées. Conformément au présent exemple, l'étape « b » comprend une première phase qui consiste à réaliser le meulage du cône et du diamètre final de la microfraise, et une deuxième phase qui consiste à réaliser le meulage des goujures, des dépouilles radiales et axiales et les piquées en bout.

Finalement, l'étape « x » du tableau I consiste à percer les canaux de sortie 19 (figure 2). Le perçage de petits trous (entre 0,05 et 0,3 mm de diamètre) dans des matériaux massifs et homogènes est une technologie bien maitrisée. A l'heure actuelle, ce genre de perçage est le plus souvent réalisé au moyen de lasers industriels. Toutefois, les matériaux frittés type cermet, comme le métal dur, sont composés de micro-grains d'un matériau dur dispersés dans une phase liante métallique ductile. Ces deux composants ont généralement des propriétés très différentes du point de vue thermique, ce qui rend ces matériaux frittés très sensibles aux microfissures. La plupart des lasers industriels utilisés pour le perçage de trous sont capables de percer des dizaines de trous par minute, mais ces lasers ont un impact thermique important. La demanderesse a observé que l'utilisation de ce genre de lasers industriels pour percer les canaux de sortie entraînait l'apparition de microfissures, ainsi qu'une dégradation du métal dur. Ce phénomène est susceptible de réduire fortement la résistance de la microfraise réalisée.

La demanderesse a également découvert qu'il était possible d'éviter les conséquences négatives associées à l'effet thermique du perçage par laser en utilisant un laser pulsé produisant des impulsions ultra-courtes (inférieure à 10 picosecondes). Grâce à cette technique, l'ablation du métal dur pour former les trous se fait à relativement basse température, sans création de microfissures et sans altérer la résistance mécanique ou chimique du métal dur.

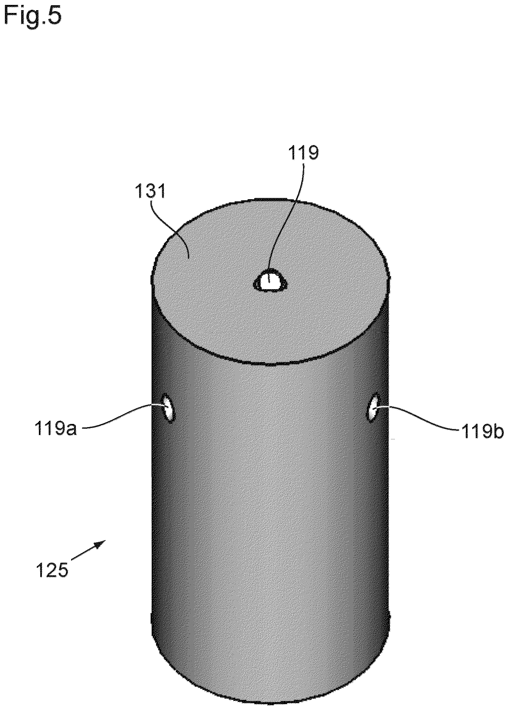

On va maintenant décrire le déroulement d'une deuxième variante de mise en oeuvre du procédé de l'invention en faisant référence aux figures 5, 6 et 7 et au tableau II annexés. En comparant le tableau I et le tableau II, on peut voir que la plupart des étapes et sous-étapes sont les mêmes dans les deux modes de mise en oeuvre. La différence essentielle entre ceux-ci réside dans le fait que l'étape « x » (dernière étape du tableau I) est remplacée dans le tableau II par une sous-étape « x » qui est intercalée entre les sous-étapes « a₂ » et « as ». La sous-étape « x » consiste à percer trois trous destinés à constituer les canaux de sortie d'une microfraise 111 réalisée par le deuxième mode de mise en oeuvre exemplaire du procédé de l'invention. Comme on va le voir plus en détail, ces trous sont percés dans la préforme de la partie de tête de l'ébauche avant l'étape de soudage.

La figure 5 est une vue schématique en perspective illustrant la préforme 125 de la partie de tête d'une ébauche d'une microfraise. La préforme 125 présente la forme générale d'un cylindre de 1,65 mm de rayon (comme dans le premier exemple). Elle est représentée dans l'état dans lequel elle se trouve à l'issue de la sous-étape « x » de perçage des canaux de sortie (les ouvertures correspondant à deux de ces canaux, référencés 119a et 119b sont visibles). La vue en perspective de la figure 5 permet notamment de voir une des deux surfaces d'extrémités (référencée 131) de la préforme 125. On peut voir qu'un trou (référencé 119) occupe le centre de cette surface. La surface d'extrémité 131 visible dans la figure 5 est la surface d'extrémité que l'on va joindre à une surface d'extrémité de l'autre préforme lors de l'étape de soudage subséquente (sous-étape « a₄ » du tableau II). Ainsi, on comprendra qu'une fois les deux préformes assemblées, le trou 119 dans la surface d'extrémité 131 sera fixé directement à une extrémité du trou axial de la préforme de la partie tubulaire (non représentée dans la figure 5). Les trois canaux de sortie 119a, 119b partent tous d'un point d'embranchement qui est situé au centre de la surface d'extrémité 131 et qui est donc confondu avec le trou 119. A l'instar de ce qui a déjà été expliqué concernant la microfraise 11 de la figure 2, les orientations des trois canaux de sorties sont espacées d'environ 120° autour de l'axe longitudinal du cylindre dans lequel on a tronçonné la préforme 125, et ils sont également inclinés d'environ 45° vers le bas par rapport au dit axe longitudinal. Les trois canaux débouchent donc à l'extérieur du cylindre à environ 1,65 mm au-dessous de la surface d'extrémité 131.

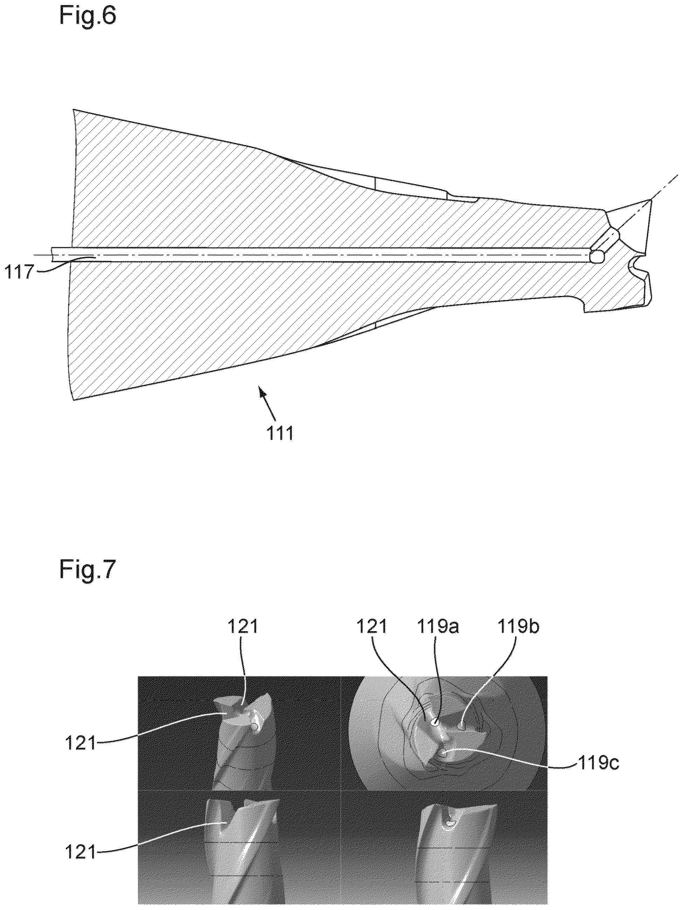

La figure 6 est une vue partielle en coupe longitudinale d'une microfraise (généralement référencée 111) qui se prête à être réalisée par le deuxième mode de mise en oeuvre exemplaire du procédé de l'invention. La figure 7, quant à elle, comprend quatre vues en perspective, sous des angles différents, de cette même microfraise. Les vues en perspective montrent notamment que les trois canaux de sortie 119a, 119b et 119c débouchent chacun dans une des piquées 121 comme dans le premier exemple. Ainsi, comme les canaux de sortie sont percés avant de tailler l'outil (étape « b » du tableau II), on comprendra que le deuxième mode de mise oeuvre du procédé de l'invention exige d'orienter le taillage en fonction de la position des trous, de manière que les canaux de sorties débouchent bien dans les trois piquées.

Pour bien orienter le taillage de la microfraise, il est nécessaire de connaître exactement la position de son ébauche. Il est possible de déterminer cette position, par exemple, avec un palpeur à contact de précision. Un premier palpage permet par exemple de définir la position de l'extrémité de tête de l'ébauche cylindrique. Ensuite le palpeur vient se positionner sur le cylindre à la bonne distance de l'extrémité (1,5 mm dans le présent exemple). Par rotation du cylindre, on permet au palpeur de détecter les positions angulaires correspondant à la présence des différents trous. Ces positions permettent de déduire une valeur d'indexage pour le taillage de la microfraise afin que les canaux de sortie débouchent bien dans les piquées.

On comprendra en outre que diverses modifications et/ou améliorations évidentes pour un homme du métier peuvent être apportées aux modes de mise en oeuvre qui font l'objet de la présente description sans sortir du cadre de la présente invention définie par les revendications annexées. En particulier, l'invention ne se limite évidemment pas à un procédé pour réaliser une microfraise comportant trois dents.

**Tableau I**

| | |
|---|---|
| Sous-étape « a₁ » | se munir d'un premier barreau en carbure cémenté fritté présentant une forme de cylindre creux et d'un second barreau en carbure cémenté fritté présentant une forme de cylindre plein ; |
| Sous-étape « a₂ » | tronçonner le premier et le second barreau en carbure cémenté fritté pour obtenir respectivement une préforme d'une partie tubulaire et une préforme d'une partie de tête de l'ébauche d'une microfraise, et aplanir au moins une face d'extrémité de la préforme d'une partie tubulaire et une face d'extrémité de la préforme d'une partie de tête (figure 1) ; |
| Sous-étape « a₃ » | Agencer la préforme d'une partie tubulaire et la préforme d'une partie de tête, bout à bout, sur un support de frittage, de manière à ce qu'une face d'extrémité aplanie de la préforme d'une partie tubulaire et une face d'extrémité aplanie de la préforme d'une partie de tête se touchent ; |
| Sous-étape « a₄ » | chauffer le support de frittage avec la préforme d'une partie tubulaire et la préforme d'une partie de tête sous vide, ou sous atmosphère inerte, et les maintenir à une température supérieure ou égale à la température de fusion eutectique, pendant une durée suffisante pour souder ensemble la préforme d'une partie tubulaire et la préforme d'une partie de tête, de façon à former une ébauche unifiée comportant un trou axial borgne ; |
| Sous-étape « a₅ » | rectifier d'éventuels défauts d'alignement entre les deux parties cylindriques de l'ébauche unifiée à l'aide d'une rectifieuse « Centerless » ; |
| Etape « b » | Tailler l'outil (machine CNC à commande numérique par calculateur) équipées de meules diamantées ; d'abord on réalise le meulage du cône et du diamètre final de la fraise ; puis sont meulées les goujures, les dépouilles radiales et axiales et les piquées en bout ; |
| Etape « x » | percer des trous pour les canaux de sortie à l'aide d'un laser ultra rapides (produisant des impulsions qui durent moins de 10 picosecondes), de manière à réduire l'impact thermique. |

**Tableau II**

| | |
|---|---|
| Sous-étape « a₁ » | se munir d'un premier barreau en carbure cémenté fritté présentant une forme de cylindre creux et d'un second barreau en carbure cémenté fritté présentant une forme de cylindre plein ; |
| Sous-étape « a₂ » | tronçonner le premier et le second barreau en carbure cémenté fritté pour obtenir respectivement une préforme d'une partie tubulaire et une préforme d'une partie de tête de l'ébauche d'une microfraise, et aplanir au moins une face d'extrémité de la préforme d'une partie tubulaire et une face d'extrémité de la préforme d'une partie de tête (figure 1) ; |
| Sous-étape « x » | percer des trous pour les canaux de sortie à l'aide d'un laser ultra rapides (produisant des impulsions qui durent moins de 10 picosecondes), de manière à réduire l'impact thermique. |
| Sous-étape « a₃ » | Agencer la préforme d'une partie tubulaire et la préforme d'une partie de tête, bout à bout, sur un support de frittage, de manière à ce qu'une face d'extrémité aplanie de la préforme d'une partie tubulaire et une face d'extrémité aplanie de la préforme d'une partie de tête se touchent ; |
| Sous-étape « a₄ » | chauffer le support de frittage avec la préforme d'une partie tubulaire et la préforme d'une partie de tête sous vide, ou sous atmosphère inerte, et les maintenir à une température suffisante et pendant une durée suffisante pour souder ensemble la préforme d'une partie tubulaire et la préforme d'une partie de tête, de façon à former une ébauche unifiée comportant un trou axial borgne ; |
| Sous-étape « a₅ » | rectifier d'éventuels défauts d'alignement entre les deux parties cylindriques de l'ébauche unifiée à l'aide d'une rectifieuse « Centerless » ; |
| Etape « y » | déterminer d'abord la position de l'ébauche unifiée ainsi que l'orientation des canaux de sortie (19 ; 119a, 119b), et indexer ensuite le taillage de la microfraise (étape « b ») en conséquence ; |
| Etape « b » | Tailler l'outil (machine CNC à commande numérique par calculateur) équipées de meules diamantées ; d'abord on réalise le meulage du cône et du diamètre final de la fraise ; puis sont meulées les goujures, les dépouilles radiales et axiales et les piquées en bout ; |

## Revendications

1. Procédé pour réaliser une fraise (11 ; 111) de diamètre inférieur ou égal à 3 mm et comportant des canaux internes (17, 19 ; 117, 119a, 119b) pour un fluide de coupe, le procédé comprenant les étapes de :
a) réaliser une ébauche en carbure cémenté fritté de la fraise ;
b) tailler la fraise par meulage de l'ébauche ;
**caractérisé en ce que** l'étape (a) comprend les sous-étapes de :
a₁) se munir d'un premier barreau en carbure cémenté fritté ayant une forme de cylindre creux et d'un second barreau en carbure cémenté fritté ayant une forme de cylindre plein ;
a₂) tronçonner le premier et le second barreau en carbure cémenté fritté pour obtenir respectivement une préforme (23) d'une partie tubulaire et une préforme (25 ; 125) d'une partie de tête de l'ébauche d'une fraise, et aplanir au moins une face d'extrémité (29) de la préforme d'une partie tubulaire et une face d'extrémité (31 ; 131) de la préforme d'une partie de tête ;
a₃) agencer la préforme (23) d'une partie tubulaire et la préforme (25 ; 125) d'une partie de tête sur un support de frittage, bout à bout, de manière à ce qu'une face d'extrémité aplanie (29) de la préforme d'une partie tubulaire et une face d'extrémité aplanie (31 ; 131) de la préforme d'une partie de tête se touchent ;
a₄) chauffer le support de frittage avec la préforme (23) d'une partie tubulaire et la préforme (25 ; 125) d'une partie de tête sous vide, ou sous atmosphère inerte, et les maintenir à une température au moins égale à la température eutectique du carbure cémenté et pendant une durée suffisante pour souder ensemble la préforme d'une partie tubulaire et la préforme d'une partie de tête, de façon à former une ébauche unifiée comportant un trou axial borgne (27) ;
a₅) rectifier les éventuels défauts d'alignement entre les deux parties cylindriques (23, 25; 125) de l'ébauche unifiée à l'aide d'une rectifieuse « Centerless » ;
et **en ce que** le procédé comporte encore, une étape ou sous-étape additionnelle consistant à :
x) percer des canaux de sortie (19 ; 119a, 119b) pour le fluide de coupe par perçage laser.

2. Procédé pour réaliser une fraise (11) selon la revendication 1, **caractérisé en ce que** l'étape ou sous-étape additionnelle (étape « x ») est mise en oeuvre après l'étape « b ».

3. Procédé pour réaliser une fraise (111) selon la revendication 1, **caractérisé en ce que** l'étape ou sous-étape additionnelle (sous-étape « x ») est mise en oeuvre entre la sous-étape « a₂ » et la sous-étape « as » ;
et **en ce que** le procédé comporte en outre une étape supplémentaire de :
y) déterminer d'abord la position de l'ébauche unifiée et l'orientation des canaux de sortie (19 ; 119a, 119b), de manière à pouvoir ensuite indexer le taillage de la fraise (étape « b ») en conséquence, l'étape « y » étant mise en oeuvre entre la sous-étape « as » et l'étape « b ».

4. Procédé pour réaliser une fraise (11 ; 111) selon l'une quelconque des revendications 1, 2 et 3, **caractérisé en ce que** l'étape ou sous-étape additionnelle (étape « x » ; sous-étape « x ») est mise en oeuvre par une technique d'ablation laser en utilisant un laser pulsé produisant des impulsions ultra-courtes, de durées inférieures à 10 picosecondes.

5. Procédé pour réaliser une fraise (11 ; 111) selon l'une quelconque des revendications précédentes, **caractérisé en ce que** les canaux internes (17, 19 ; 117, 119a, 119b) pour un fluide de coupe comprennent un canal central (17 ; 117) et des canaux de sortie (19 ; 119a, 119b), le canal central ayant comme point de départ une extrémité débouchante agencée pour recevoir du liquide de coupe fourni à travers un porte-outil, et se terminant par un embranchement terminal donnant naissance à au moins une partie des dits canaux de sortie, lesdits canaux de sortie divergeant à partir d'au moins un embranchement du canal central.

6. Procédé pour réaliser une fraise (11 ; 111) selon la revendication 5, **caractérisé en ce que** le canal central (17; 117) est de forme cylindrique et rectiligne et qu'il est coaxial avec la fraise.

7. Procédé pour réaliser une fraise (11 ; 111) selon la revendication 5 ou 6, **caractérisé en ce que** l'embranchement terminal donne naissance à chacun des dits canaux de sortie (19 ; 119a, 119b),

8. Procédé pour réaliser une fraise (11 ; 111) selon l'une quelconque des revendications 5, 6 et 7, **caractérisé en ce que** les canaux de sortie (19; 119a, 119b) qui divergent à partir de l'embranchement terminal débouchent respectivement dans les piquées (21 ; 121) de la fraise.

## Patentansprüche

1. Verfahren zum Herstellen einer Fräse (11; 111) mit einem Durchmesser von kleiner oder gleich 3 mm, die Innenkanäle (17, 19; 117, 119a, 119b) für ein Schneidfluid umfasst, wobei das Verfahren die folgenden Schritte umfasst:
a) Herstellen eines Rohlings der Fräse aus gesintertem Sintercarbid;
b) Schneiden der Fräse durch Schleifen des Rohlings;
**dadurch gekennzeichnet, dass** der Schritt (a) die folgenden Teilschritte umfasst:
a₁) Bereitstellen eines ersten Stabs aus gesintertem Sintercarbid, der eine Form eines hohlen Zylinders aufweist, und eines zweiten Stabes aus gesintertem Sintercarbid, der eine Form eines massiven Zylinders aufweist;
a₂) Ablängen des ersten und des zeiten Stabs aus gesintertem Sintercarbid, um eine Vorform (23) eines rohrförmigen Teils beziehungsweise eine Vorform (25; 125) eines Kopfteils des Rohlings einer Fräse zu erhalten, und Abflachen mindestens einer Endseite (29) der Vorform eines rohrförmigen Teils und einer Endseite (31; 131) der Vorform eines Kopfteils;
a₃) aneinander Einrichten der Vorform (23) eines rohrförmigen Teils und der Vorform (25; 125) eines Kopfteils auf einem Sinterhalter, derart dass eine abgeflachte Endseite (29) der Vorform eines rohrförmigen Teils und eine abgeflachte Endseite (31; 131) der Vorform eines Kopfteils sich berühren;
a₄) Erhitzen des Sinterhalters mit der Vorform (23) eines rohrförmigen Teils und der Vorform (25; 125) eines Kopfteils in Vakuum oder in inerter Atmosphäre und deren Halten bei einer Temperatur, die mindestens gleich der eutektischen Temperatur des Sintercarbids ist, und während einer Dauer, die ausreicht, um die Vorform eines rohrförmigen Teils und die Vorform eines Kopfteils zusammenzuschweißen, derart dass ein vereinter Rohling gebildet wird, der ein axiales Sackloch (27) umfasst;
a₅) Feinschleifen möglicher Ausrichtungsfehler zwischen den zwei zylindrischen Teilen (23, 25; 125) des vereinten Rohlings mittels einer Centerless-Schleifmaschine;
und dadurch, dass das Verfahren ferner einen zusätzlichen Schritt oder Teilschritt umfasst, der besteht im:
x) Bohren von Austrittskanälen (19; 119a, 119b) für das Schneidfluid durch Laserbohren.

2. Verfahren zum Herstellen einer Fräse (11) nach Anspruch 1, **dadurch gekennzeichnet, dass** der zusätzliche Schritt oder Teilschritt (Schritt "x") nach dem Schritt "b" durchgeführt wird.

3. Verfahren zum Herstellen einer Fräse (111) nach Anspruch 1, **dadurch gekennzeichnet, dass** der zusätzliche Schritt oder Teilschritt (Teilschritt "x") zwischen dem Teilschritt "a₂" und dem Teilschritt "a₃" durchgeführt wird;
und dadurch, dass das Verfahren ferner einen zusätzlichen Schritt umfasst zum:
y) zuerst Bestimmen der Position des vereinten Rohlings und der Ausrichtung der Austrittskanäle (19; 119a, 119b) derart, dass dann das Schneiden der Fräse (Schritt "b") dementsprechend indexiert werden kann, wobei der Schritt "y" zwischen dem Teilschritt "a₅" und dem Schritt "b" durchgeführt wird.

4. Verfahren zum Herstellen einer Fräse (11; 111) nach einem der Ansprüche 1, 2 und 3, **dadurch gekennzeichnet, dass** der zusätzliche Schritt oder Teilschritt (Schritt "x"; Teilschritt "x") durch eine Laserablationstechnik unter Verwendung eines Impulslasers durchgeführt wird, der ultrakurze Impulse mit Dauern von unter 10 Pikosekunden erzeugt.

5. Verfahren zum Herstellen einer Fräse (11; 111) nach einem der vorhergehenden Ansprüche, **dadurch gekennzeichnet, dass** die Innenkanäle (17, 19; 117, 119a, 119b) für ein Schneidfluid einen mittleren Kanal (17; 117) und Austrittskanäle (19; 119a, 119b) umfassen, wobei der mittlere Kanal als Ausgangspunkt ein mündendes Ende aufweist, das eingerichtet ist, um Schneidfluid aufzunehmen, das über einen Werkzeughalter zugeführt wird, und mit einer Endverzweigung endet, die zur Bildung mindestens eines Teils der Austrittskanäle führt, wobei die Austrittskanäle ausgehend von mindestens einer Verzweigung des mittleren Kanals auseinanderlaufen.

6. Verfahren zum Herstellen einer Fräse (11; 111) nach Anspruch 5, **dadurch gekennzeichnet, dass** der mittlere Kanal (17; 117) eine zylindrische oder geradlinige Form aufweist und dass er koaxial mit der Fräse ist.

7. Verfahren zur Herstellung einer Fräse (11; 111) nach Anspruch 5 oder 6, **dadurch gekennzeichnet, dass** die Endverzweigung zur Bildung von jedem der Austrittskanäle (19; 119a, 119b) führt.

8. Verfahren zur Herstellung einer Fräse (11; 111) nach einem der Ansprüche 5, 6 und 7, **dadurch gekennzeichnet, dass** die Austrittskanäle (19; 119a, 119b), die ausgehend von der Endverzweigung auseinanderlaufen, jeweils in Kehlen (21; 121) der Fräse münden.

## Claims

1. Method for producing a milling tool (11; 111) with a diameter less than or equal to 3 mm and comprising internal channels (17, 19; 117, 119a, 119b) for a cutting fluid, the method comprising the steps of:
a) producing a sintered cemented carbide blank of the milling tool;
b) cutting the milling tool by grinding the blank;
**characterised in that** step (a) comprises the sub-steps of:
a₁) procuring a first sintered cemented carbide bar in the form of a hollow cylinder and a second sintered cemented carbide bar in the form of a solid cylinder;
a₂) cross-cutting the first and the second sintered cemented carbide bar in order to obtain respectively a preform (23) of a tubular part and a preform (25; 125) of a head part of the blank of a milling tool, and flattening at least an end face (29) of the preform of a tubular part and an end face (31; 131) of the preform of a head part;
a₃) arranging the preform (23) of a tubular part and the preform (25; 125) of a head part on a sintering support, end to end, so that a flattened end face (29) of the preform of a tubular part and a flattened end face (31; 131) of the preform of a head part touch each other;
a₄) heating the sintering support with the preform (23) of a tubular part and the preform (25; 125) of a head part under vacuum or in an inert atmosphere, and keeping them at a temperature at least equal to the eutectic temperature of the cemented carbide for a duration sufficient to weld together the preform of a tubular part and the preform of a head part so as to form a unified blank comprising a blind axial hole (27);
a₅) rectifying possible defects in alignment between the two cylindrical parts (23, 25; 125) of the unified blank by means of a "centreless" grinder;
and **in that** the method also comprises an additional step or sub-step consisting of:
x) piercing outlet channels (19; 119a, 119b) for the cutting fluid by laser piercing.

2. Method for producing a milling tool (11) as claimed in claim 1, **characterised in that** the additional step or sub-step (step x) is implemented after step "b".

3. Method for producing a milling tool (111) as claimed in claim 1, **characterised in that** the additional step or sub-step (sub-step "x") is implemented between sub-step "a₂" and sub-step "a₃";
and **in that** the method further comprises a supplementary step of:
y) firstly determining the position of the unified blank and the orientation of the outlet channels (19; 119a, 119b) so as to be able then to index the cutting of the milling tool (step "b") as a result, step "y" being implemented between sub-step "a₅" and step "b".

4. Method for producing a milling tool (11; 111) as claimed in any one of claims 1, 2 and 3, **characterised in that** the additional step or sub-step (step "x"; sub-step "x") is implemented by a laser ablation technique using a pulsed laser producing ultra-short pulses of durations less than 10 picoseconds.

5. Method for producing a milling tool (11; 111) as claimed in any one of the preceding claims, **characterised in that** the internal channels (17, 19; 117, 119a, 119b) for a cutting fluid comprise a central channel (17; 117) and outlet channels (19; 119a, 119b), the central channel having, as a starting point, a through-end arranged to receive cutting liquid supplied through a tool holder, and terminating by a terminal branch giving rise to at least a part of said outlet channels, said outlet channels diverging from at least one branch of the central channel.

6. Method for producing a milling tool (11; 111) as claimed in claim 5, **characterised in that** the central channel (17; 117) is of a straight and cylindrical shape and that it is coaxial with the milling tool.

7. Method for producing a milling tool (11; 111) as claimed in claim 5 or 6, **characterised in that** the terminal branch gives rise to each of said outlet channels (19; 119a, 119b),

8. Method for producing a milling tool (11; 111) as claimed in any one of claims 5, 6 and 7, **characterised in that** the outlet channels (19; 119a, 119b) which diverge from the terminal branch open respectively into the taps (21; 121) of the milling tool.
